Europäisches Patentamt

European Patent Office

Office européen des brevets

(19)

(11) Publication number: **0 127 290**
**B1**

# (12) EUROPEAN PATENT SPECIFICATION

(45) Date of publication of patent specification: **29.07.87**

(21) Application number: **84302267.4**

(22) Date of filing: **03.04.84**

(51) Int. Cl.⁴: **B 01 D 3/00,** B 01 D 19/00

(54) **Procedure for removing gases from distilling apparatus.**

(30) Priority: **20.05.83 FI 831798**

(43) Date of publication of application:
**05.12.84 Bulletin 84/49**

(45) Publication of the grant of the patent:
**29.07.87 Bulletin 87/31**

(84) Designated Contracting States:
**AT BE CH DE FR GB IT LI NL SE**

(56) References cited:
**DE-B-1 274 043**
**US-A-4 346 560**

(73) Proprietor: **OY-FINN-AQUA LTD.,**
**Hankasuontie 4-6**
**SF-00390 Helsinki 39 (FI)**

(72) Inventor: **Huhta-Koivisto, Esko**
**Säynävätie 4B**
**02170 Espoo (FI)**

(74) Representative: **Lee, Philip Graham et al**
**MARKS & CLERK 57/60 Lincoln's Inn Fields.**
**London WC2A 3LS (GB)**

Courier Press, Leamington Spa, England.

## Description

The present invention concerns a procedure for removing gases from a distilling apparatus in which procedure the effluent water is caused to run from the distilling apparatus along an effluent water line to an effluent heat exchanger for recovering the heat contained in the effluent and in which procedure part of the feed water is caused to flow along a first branch line through a distillate heat exchanger and part along a second branch line through an effuent water heat exchanger for preheating the feed water.

In distilling apparatus such as e.g. in distilling apparatus operating on the thermocompressor principle, air is produced during operation, which has to be removed from the distilling apparatus. Regarding distilling apparatus operating on the thermocompressor principle, reference is made, as state of art, for instance to the Finnish Patent No. 61999. In all distilling apparatus known in the art, air removal is arranged in that the distilling apparatus is provided with venting holes through which the air may escape into the environment. Of course, a design like this is not advantageous with a view to energy economy.

The object of the invention is to achieve improvement of distilling apparatus known in the art. The more specific object of the invention is to provide a distilling apparatus in which the gases generated during operation can be removed in a sensible way and utilized.

The objects of the invention are attained by a procedure which is characterized in that the mixture of distillate, vapour and gases is conducted from the distilling means along a flow line to a degassing heat exchanger, where the heat contained in said mixture is recovered and the recovered heat is utilized in preheating the feed water by conducting the feed water after said distillate heat exchanger and said effluent heat exchanger along a header line through said degassing heat exchanger, and further by a tubular connector into the distilling apparatus, gases being allowed to escape from the degassing heat exchanger through a gas venting hole into the environment.

In the procedure of the invention, is has been understood to employ a degassing heat exchanger to which is conducted from the distilling apparatus the mixture of distillate, vapour and gas and the heat contained in the mixture is recovered. The recovered heat is utilized in preheating the feed water. As a result, the design of the invention renders possible that no separate feed water preheating is needed and, moreover, the heat surfaces of the preceding heat echangers can be reduced about 30%.

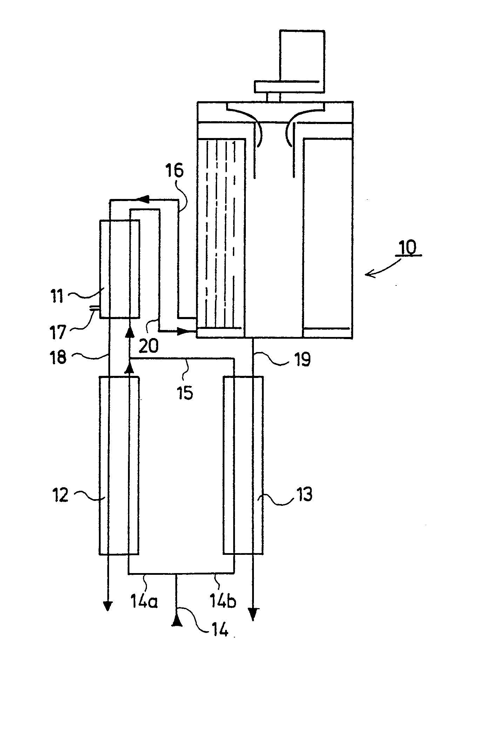

The invention is described in detail referring to the principle design of the invention presented in the figures of the drawing attached, to which however the invention is not meant to the exclusively confined.

In the figure of the drawing, the distilling apparatus is generally indicated by reference numeral 10. As to its construction, the distilling apparatus 10 may by any type of distilling apparatus, and for instance it may be a distilling apparatus operating on the thermocompressor principle disclosed in the Finnish Patent No. 61999. By reference numeral 11 is indicated the degassing heat exchanger of the invention. By reference numeral 12 is indicated a distillate heat exchanger known in itself in the art and by reference numeral 13, an effluent water heat exchanger known in itself in the art. By reference numeral 14 is indicated the feed line for the liquid to be distilled. The line 14 is divided into branches 14a and 14b, the branch 14a passing through the distillate heat exchanger 12 and the branch 14b similarly through the effluent heat exchanger 13. By reference numeral 15 is indicated the header line of the branches 14a and 14b.

The mixture of distillate, vapour and gas is conducted from the distilling apparatus 10 by a tubular connector 16 to the degassing heat exchanger 11 of the invention. This mixture flow is condensed to liquid in the degassing heat exchanger 11, and the gases can escape through a gas venting hole 17 into the environment. The recovered thermal energy has been disposed to heat the feed water flowing in the line 14, 14a, 14b and 15. After the degassing heat exchanger 11, the feed water is conducted along the line 20 into the distilling apparatus 10. In the lower part of the degassing heat exchanger 11, a tubular connector 18 has been provided, through which the distillate is withdrawn for use. From the distilling apparatus 10, a tubular connector 19 leads to the effluent heat exchanger 13, and the effluent water flows along this line 19 and releases its heat in the effluent heat exchanger 13.

The procedure of the invention renders possible the sensible removal, and utilization, of the thermal energy contained in the gas and vapour generated in the distilling apparatus 10. As a result, when the design of the invention is applied, no separate feed water preheating is required in the distilling apparatus: by the combined effect of the distillate heat exchanger 12 and the effluent heat exchanger 13 known in themselves in the art and of the degassing heat exchanger 11 of the invention the feed water can be adequately heated.

The heat surfaces of the distillate heat exchanger 12 and similarly those of the effluent heat exchanger 13 can be reduced even as much as about 30%, which renders possible a structure of lighter weight and a distilling apparatus of lower cost.

## Claims

1. A procedure for removing gases from a distilling apparatus (10), in which procedure the effluent is caused to flow from the distilling apparatus along an effluent line (19) to an effluent heat exchanger (13) for recovery of the heat contained in the effluent water, and in which procedure part of the feed water is caused to flow

3   0 127 290   4

along a first branch line (14a) through a distillate heat exchanger (12) and part along a second branch line (14b) through the effluent heat exchanger (13) for the purpose of preheating the feed water, characterised in that the mixture of distillate, vapour and gases is conducted from the distilling apparatus (10) along a flow line (16) to a degassing heat exchanger (11), where the heat contained in said mixture is recovered, and the recovered heat is utilized in preheating the feed water by conducting the feed water after said distillate heat exchanger (12) and said effluent heat exchanger (13) along a header line (15) through said degassing heat exchanger (11) and further by a tubular connector (20) into the distilling apparatus (10), the gases being allowed to escape from said degassing heat exchanger (11) through a gas venting hole (17) into the environment.

2. A procedure according to claim 1, characterized in that said mixture flow is condensed in the degassing heat exchanger (11) to distillate and the distillate is conducted from the lower part of the degassing heat exchanger (11) along a distillate line (18) to the distillate heat exchanger (12).

**Patentansprüche**

1. Verfahren zum Entfernen von Gasen aus Destillationsapparaturen (10), bei welchem das Ablaufwasser von den Apparaturen durch eine Ablaufwasserleitung (19) zu einem Ablaufwasser-Wärmeaustauscher (13) zur Wiedergewinnung der im Ablaufwasser vorhandenen Wärme fliesst, wobei das Verfahren bewirkt, dass ein Teil des Speisewassers durch eine erste Abzweigung (14a) durch einen Destillations-Wärmeaustauscher (12), und ein weiterer Teil durch eine zweite Abzweigung (14b) durch einen Ablaufwasser-Wärmeaustauscher (13) zum Vorwärmen des Speisewassers fliesst, dadurch gekennzeichnet, dass die Mischung aus Destillat, Dampf und Gasen vom Destillationsapparat (10) durch eine Leitung (16) zu einem Entgasungs-Wärmeaustauscher (11) geleitet wird, wobei die in der Mischung enthaltene Wärme wiedergewonnen und zum Vorwärmen des Speisewassers benutzt wird, indem es nach dem Destillat- (12) und dem Ablaufwasser-Wärmeaustauscher (13) durch eine Druckkesselleitung (15) durch den Entgasungs-Wärmeaustauscher (11) und ferner durch einen rohrförmigen Verbindungsteil (20) in den Destillationsapparat (10) geleitet wird, wobei die Gase vom Entgasungs-Wärmeaustauscher (11) durch ein Gasventilationsloch (17) in die Umgebung strömen kann.

2. Verfahren nach Anspruch 1, dadurch gekennzeichnet, dass die Mischung im Entgasungs-Wärmeaustauscher (11) zur Destillation im Entgasungs-Wärmeaustauscher (11) kondensiert wird, und dass das Destillat vom unteren Teil des Entgasungs-Wärmeaustauschers (11) durch eine Destillatleitung (18) zum Destillat-Wärmeaustauscher (12) geleitet wird.

**Revendications**

1. Procédé d'élimination de gas d'un appareil de distillation (10), procédé dans lequel on fait parvenir l'eau de sortie de l'appareil de distillation à un échangeur de chaleur d'écoulement de sortie (13) le long d'une conduite d'écoulement de sortie (19) pour récupérer la chaleur contenue dans l'eau de sortie, et dans lequel on fait passer une partie de l'eau d'alimentation le long d'un premier embranchement (14a) par un échangeur de chaleur de distillat (12) et une partie le long d'un second embranchement (14b) par l'échangeur de chaleur d'écoulement de sortie (13) dans le but de préchauffer l'eau d'alimentation, caractérisé en ce qu'on fait passer le mélange de distillat, de vapeur et de gaz de l'appareil de distillation (10), le long d'une conduite d'écoulement (16), à un échangeur de chaleur de dégazage (11) où la chaleur contenue dans ledit mélange est récupérée, et la chaleur récupérée est utilisée pour préchauffer l'eau d'alimentation en faisant passer l'eau d'alimentation, après ledit échangeur de chaleur de distillat (12) et ledit échangeur de chaleur d'écoulement de sortie (13), le long d'une conduite collectrice (15), par ledit échangeur de chaleur de dégazage (11), puis par un raccord tubulaire (20) dans l'appareil de distillation (10), les gaz pouvant s'échapper dudit échangeur de chaleur de dégazage (11), par un trou d'évacuation de gaz (17), dans l'environnement.

2. Procédé selon la revendication 1, caractérisé en ce que ledit écoulement de mélange est condensé dans l'échangeur de chaleur de dégazage (11) en distillat, et le distillat est amené de la partie inférieure de l'échangeur de chaleur de dégazage (11), le long d'une conduite de distillat (18), à l'échangeur de chaleur de distillat (12).

3